# EUROPÄISCHE PATENTSCHRIFT

(11) **EP 1 818 353 B1**
(45) Veröffentlichungstag und Bekanntmachung des Hinweises auf die Patenterteilung: **22.10.2008**
(21) Anmeldenummer: 07001849.4
(22) Anmeldetag: 29.01.2007
(51) Int. Cl.: C08G 65/26

(54) **Verfahren zur Herstellung von Polyalkylenglykol-Schmiermittelbasisölen mit enger Molmassenverteilung**
Method for manufacturing polyalkylenglycol lubricant base oils with a dense molar mass distribution
Procédé de production des huiles à base de lubrifiant polyalkylène-glycol dotées d'une répartition précise de la masse moléculaire

(30) Priorität: 14.02.2006 DE 102006006696
(43) Veröffentlichungstag der Anmeldung: 15.08.2007
(73) Patentinhaber: Clariant International Ltd., 4132 Muttenz (CH)
(72) Erfinder: Pöllmann, Klaus, Dr., 84489 Burghausen (DE); Strasser, Anton, 84503 Altötting (DE); Scholz, Guido, Dr., 84508 Burgkirchen (DE); Vybiral, Reinhard, Dr., 84508 Burgkirchen (DE)
(74) Vertreter: Mikulecky, Klaus

(56) Entgegenhaltungen:
- WO-A-20/04029131
- DE-A1- 19 903 274
- US-A- 5 563 221
- US-B1- 6 359 101

## Beschreibung

Die vorliegende Erfindung betrifft ein Verfahren zur Herstellung von Polyalkylenglykolen mit enger Molmassenverteilung und geringem Gehalt an niedermolekularen, allylfunktionellen Nebenprodukten, ausgehend von Propylenoxid oder Gemischen aus Ethylenoxid und Propylenoxid, welche als Schmiermittelbasisöle verwendbar sind.

Polyalkylenglykole werden im Allgemeinen durch anionische, ringöffnende Polymerisation von Alkylenoxiden (Ethylenoxid, Propylenoxid, Butylenoxid) mit Alkoholen als Initiatoren gemäß folgender Reaktionsgleichung hergestellt (siehe Ullmann Encyclopedia of Industrial Chemistry 5. ed VCH, ISBN 3-527-20100-9). Mit R'-OH = Butanol entstehen so α-Butoxy-Ω-hydroxy-Polyalkylenglykole. Mit R'-OH = Diethylenglykol oder Dipropylenglykol als Initiator entstehen so α-Ω-dihydroxy-Polyalkylenglykole. Die Verwendung und Erfordernisse dieser Polyalkylenglykole als Basisöle zur Formulierung von Schmierstoffen ist zum Beispiel beschrieben in den FDA-Regulatorien 21 CFR 178.3910 (Surface lubricants used in manufacture of metallic articles) oder 21 CFR 173.340, 21 CFR 178.3570 (lubricants with incidental food contact). Die Charakterisierung dieser Polyalkylenglykolbasisöle erfolgt über deren Viskosität, ihre mittlere Molmasse sowie Molmassenverteilung und das Verhältnis der eingebauten Alkylenoxidmonomere. Als Katalysatoren der anionischen Polymerisation der Alkylenoxide werden dabei im allgemeinen Alkalihydroxide wie Kalium- oder Natriumhydroxid eingesetzt.

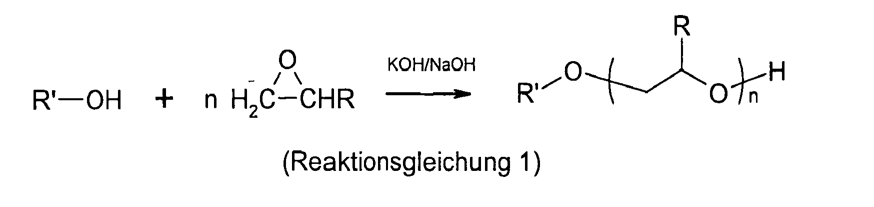

Es ist bekannt, dass mit Propylenoxid als Monomerbaustein die genannten Alkalihydroxidkatalysatoren nicht nur das Kettenwachstum der entstehenden Polymere katalysieren sondern gleichzeitig die Umlagerung von Propylenoxid zu Allylalkohol begünstigen (Reaktionsgleichung 2) (de Luca, Rodriguez, Perez-Collado in Polym.lnt. 51, 1066-1071).

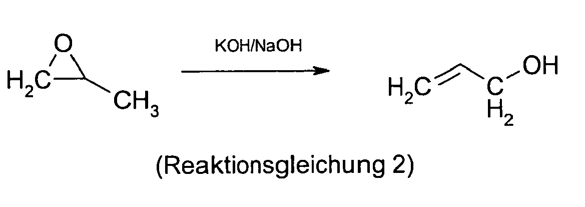

Da der entstehende Allylalkohol als Initiator R"-OH der anionischen Polymerisation gemäß Reaktionsgleichung 1 wirkt und in Konkurrenz zum ursprünglichen Initiatoralkohol und den wachsenden Polyalkylenglykolketten tritt, verbreitert sich die Molmassenverteilung und erniedrigt sich die mittlere Molmasse und die Viskosität der resultierenden Polyalkylenglykolbasisöle. Gleichzeitig entstehen niedermolekulare allylfunktionelle Polyalkylenglykole, die den Anteil an flüchtigen organischen Substanzen (VOC) und damit bei Hochtemperaturanwendungen den Verdampfungsverlust erhöhen. Diese allylfunktionellen Polyalkylenglykolbasisöle können einfach mittel ¹H-NMR oder mittel Jodzahltitration gemäß Standardmethode DGF C-V 11 b bestimmt werden.

Seit langen wird versucht, diese Umlagerungsreaktion so weit wie möglich zurückzudrängen. Eine geringfügige, jedoch nicht ausreichende Verbesserung ist durch die Verwendung von Cäsiumhydroxid anstelle von Kalium- oder Natriumhydroxid und das Reduzieren der Reaktionstemperatur möglich, die aber die Polymerisation insgesamt verlangsamt und damit unwirtschaftlicher macht (JP-A-10 110 029).

Analytisch kann die mittlere Molmasse durch Bestimmung der OH-Zahl nach DIN 53240 ermittelt werden. Man erhält dabei nur das Zahlenmittel (Mn). Die aussagekräftigere Molmassenverteilung erhält man zum Beispiel mittels Gelpermeationschromatographie (GPC) mit Polyethylenglykolstandards und THF als Lösungsmittel auf einer Kombination von 10², 10³, 10⁴A DVB-Gelsäulen. Dabei wird die Breite der Molmassenverteilung durch die so genannte Polydispersität D = Mw/Mn angegeben, worin Mw = Gewichtsmittel der Molmasse und Mn = Zahlenmittel der Molmasse sind. Je näher Mw/Mn bei 1,0 liegt desto enger ist die Molmassenverteilung und desto geringer sind im Allgemeinen auch die niedermolekularen Anteile. Der Anteil an niedermolekularen, flüchtigen Substanzen (VOCs = volatile organic compounds) kann darüber hinaus auch mittels Gaschromatographie, zum Beispiel mittels der Methode nach DIN 55649 (Bestimmung des Gehalts an flüchtigen organischen Verbindungen) oder einfacher durch Bestimmung des Verdampfungsverlusts bei verschiedenen Temperaturen erfasst werden.

Auch bei der Herstellung von Polyetherpolyolen als Rohstoffe der Polyurethanschaumsynthese stellt die Bildung von Allylalkohol als Umlagerungsprodukt von Propylenoxid und in Folge dessen die Entstehung von Monoolen bei der alkalischen Katalyse mit Alkalihydroxiden ein großes Problem dar. Aus diesem Grund werden zur Herstellung von Polyetherpolyolen für die Polyurethanschaumsynthese neben Alkalihydroxiden in jüngerer Zeit verstärkt so genannte DMC-Katalysatoren der allgemeinen Formel Zn₃[CO(CN)₆]₂•xZnCl₂•yH₂O•z Glyme eingesetzt, die die Bildung von allylfunktionellen Monoolen deutlich reduzieren und die Reaktionsgeschwindigkeit deutlich erhöhen sollen. Die Herstellung und Anwendung dieser Katalysatoren ist zum Beispiel beschrieben in EP-A-555 053 (Beispiel 1), EP-A-700 949, EP-A-743 093, EP-A-968 055, EP-A-1 244 519, EP-A-1 276 563.

Für die Anwendung von Polyalkylenglykolen als Schmierstoffbasisöle ist die Viskosität ein entscheidendes Kriterium. Deshalb erfolgt die Einteilung von Basisölen für Schmierstoffe in so genannte ISO-VG-Klassen (Viskositätsklasse nach DIN 51519).

Aus den Polyalkylenglykolen als Basisöle lassen sich durch Zusatz von geeigneten Additiven fertige Schmierstoffe, z.B. Getriebeöle oder Hydrauliköle, formulieren, die dann erhöhte Anforderungen bezüglich Verschleißverhalten, Schmierleistung und Alterungsstabilität aufweisen. Ein typischer Test zur Charakterisierung der Schmierleistung ist der FZG-Test gemäß DIN 51354.

Aufgabe der vorliegenden Erfindung war es, ein Verfahren zur Herstellung von Polyalkylenglykol-Basisölen zur Formulierung von Schmiermitteln zur Verfügung zu stellen, die im Vergleich zu den konventionellen Typen, die mittels anionischer Polymerisation hergestellt werden, einen geringeren Gehalt an Allylgruppen, eine engere Molmassenverteilung und geringere Anteile niedermolekularer, flüchtiger Komponenten (VOCs) aufweisen, und damit im Schmiermitteleinsatz bei den vorgegebenen Anwendungstemperaturen geringere Verluste zeigen.

Überraschenderweise wurde nun gefunden, dass zur Verwendung als Basisöle für Schmiermittel geeignete Polyalkylenglykole herstellbar sind, indem man ein Polyalkylenglykolprepolymer mit einem einzelnen oder einem Gemisch aus mehreren Alkylenoxiden mittels Zink-Cobalt-Dimetallcyanidkatalyse (DMC-Katalyse) in Gegenwart eines ein- oder mehrwertigen Alkohols alkoxyliert.

Gegenstand vorliegender Erfindung ist somit ein Verfahren zur Herstellung von Polyalkylenglykolen, indem man ein Gemisch aus einem ein- oder mehrwertigen Alkohol und einem Polyalkylenglykolprepolymer mit einem C₂- bis C₄-Alkylenoxid oder einer Mischung solcher Alkylenoxide in Gegenwart eines Katalysators, der Zn₃[Co(CN)₆]₂ enthält, umsetzt, wobei der ein- oder mehrwertige Alkohol ein Molekulargewicht von bis zu 500 g/mol aufweist, sowie 1 bis 20 Kohlenstoffatome und 1 bis 10 Hydroxylgruppen enthält, und das Polyalkylenglykolprepolymer das Additionsprodukt eines C₂- bis C₄-Alkylenoxids oder einer Mischung solcher Alkylenoxide in einer Menge von mindestens 500 g/mol an einen ein- oder mehrwertigen Alkohol mit 1 bis 20 Kohlenstoffatomen und 1 bis 10 Hydroxylgruppen ist.

Ein weiterer Gegenstand der Erfindung ist die Verwendung von Polyalkylenglykolen, erhältlich nach dem vorstehend beschriebenen Verfahren, als Basisöl zur Herstellung von Schmiermitteln oder wässrigen Hydraulikflüssigkeiten.

Der ein- oder mehrwertige Alkohol mit 1 bis 20 Kohlenstoffatomen und 1 bis 10 Hydroxylgruppen (der im folgenden als "Startalkohol" bezeichnet wird) hat ein Molekulargewicht von bis zu 500 g/mol, ist also monomer und destillierbar, und enthält in einer bevorzugten Ausführungsform 2 bis 12 Kohlenstoffatome. Er enthält weiterhin bevorzugt 1 bis 6, insbesondere 1, 2, 3 oder 4 Hydroxylgruppen. Er kann auch eine, zwei, drei oder vier (C₂-C₄)-Alkoxygruppen umfassen.

### Bevorzugte Startalkohole sind beispielsweise

Monoalkohole der Formel R'-OH mit R' = C₁-C₂₀-Alkyl, R' =C₁-C₂₀-Alkyl-O-(C₂-C₄)-alkylen- (beispielsweise Methylglykol, Butylglykol), R' = C₁-C₂₀-Alkyl- O-(C₂-C₄)-Alkylen-O-(C₂-C₄)-Alkylen (beispielsweise Methyldiglykol, Butyldiglykol), R' = C₁-C₂₀-Alkyl-O-(C₂-C₄)-Alkylen-O-(C₂-C₄)-Alkylen-O-(C₂-C₄)-Alkylen (beispielsweise Methyltriglykol, Butyltriglykol),

Diole der Formel HO-R²-OH mit R²= C₂-C₆-Alkylen, (C₂-C₄)-Alkylen-O-(C₂-C₄)-Alkylen oder (C₂-C₄)-Alkylen-O-(C₂-C₄)-Alkylen-O-(C₂-C₄)-Alkylen (beispielsweise Diethylenglykol, Dipropylenglykol, Triethylenglykol, Tripropylenglykol, Tetraethylenglykol, Tetrapropylenglykol),

Triole, wie beispielsweise Glycerin und Trimethylolpropan, sowie

Tetraole, wie beispielsweise Pentaerythritol.

Besonders bevorzugt sind Monoalkohole R'-OH mit R' = C₁-C₄-Alkyl, sowie die entsprechenden C₁-C₄-Alkyl-monoethylenglykol, -monopropylenglykol, -diethylenglykol, -dipropylenglykol, -triethylenglykol oder -tripropylenglykolether.

Die Polyalkylenglykolprepolymere sind α-Alkoxy-Ω-hydroxy-Copolymere und α-Ω-dihydroxy-Copolymere, die aus Ethylenoxid, Propylenoxid und/oder Butylenoxid oder deren Mischungen in beliebiger Zusammensetzung und einem ein- oder mehrwertigen Alkohol mit 1 bis 20 Kohlenstoffatomen und 1 bis 10 Hydroxylgruppen oder Wasser hergestellt wurden. Bevorzugt sind solche Polyalkylenglykolprepolymere, die Propylenoxid in einem Anteil von mindestens 20 Gew.-% enthalten.

Die im Polyalkylenglykolprepolymer enthaltenen Alkylenoxidgruppen weisen zusammen mindestens ein Molekulargewicht von 500 g/mol auf. In einer bevorzugten Ausführungsform umfasst das Polyalkylenglykolprepolymer mindestens eine Alkylenoxidkette, die ein Molekulargewicht von 500 g/mol aufweist.

Das Polyalkylenglykolprepolymer ist in einer bevorzugten Ausführungsform ein Additionsprodukt von C₂- bis C₄-Alkylenoxid oder einer Mischung solcher Alkylenoxide an einen Alkohol mit 2 bis 12 Kohlenstoffatomen. Der Alkohol enthält weiterhin bevorzugt 1 bis 6, insbesondere 1, 2, 3 oder 4 Hydroxylgruppen.

In einer weiteren bevorzugten Ausführungsform entspricht das Polyalkylenglykolprepolymer der Formel (1) 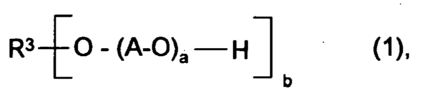 worin
a für eine Zahl von 5 bis 70,
b für eine Zahl von 1 bis 10
(A-O) für eine C₂- bis C₄-Alkoxygruppe,
R³ für eine Kohlenwasserstoffgruppe mit 1 bis 20 Kohlenstoffatomen und 1 bis 10 Hydroxylgruppen stehen.

In einer weiteren bevorzugten Ausführungsform entspricht das Polyalkylenglykolprepolymer der Formel (2)

R⁵ - O - (A-O)ₐ - R⁴ (2),

worin
a für eine Zahl von 5 bis 70,
(A-O) für eine C₂- bis C₄-Alkoxygruppe, und
R⁴ und R⁵ unabhängig voneinander für Wasserstoff oder eine C₁- bis C₆-Alkylgruppe stehen, wobei jedoch mindestens einer der Reste R⁴ oder R⁵ für Wasserstoff steht,

Der verwendete Zink-Cobalt-Dimetallcyanidkatalysator (im Folgenden auch "DMC-Katalysator" genannt) ist aus dem Stand der Technik bekannt. Er enthält Zn₃[Co(CN)₆]₂.

Das erfindungsgemäße Verfahren wird vorzugsweise wie folgt durchgeführt.

Der Startalkohol wird vorzugsweise in einer Konzentration von 1 bis 40 Gew.-%, insbesondere 5 bis 30 Gew.-%, in einem Druckreaktor in einem Polyalkylenglykolprepolymer gelöst. Der pulverförmige DMC-Katalysator wird in einer Konzentration von vorzugsweise 100 - 600 ppm in diesem Gemisch homogen dispergiert. Das Reaktionsgemisch wird unter Stickstoff auf eine Temperatur von vorzugsweise 90 bis 170°C, insbesondere auf eine Temperatur von 110 - 150°C aufgeheizt. Bei dieser Temperatur wird eine Teilmenge des Alkylenoxids zudosiert. Nach Anspringen der Polymerisationsreaktion, erkennbar am Druckabfall und der Temperaturerhöhung im Reaktor, wird die zur Erreichung der jeweiligen Viskosität des Schmiermittelbasisöls notwendige restliche Menge des Alkylenoxids zudosiert.

Die so erhaltenen, erfindungsgemäßen Polyalkylenglykole sind demnach α-Alkoxy-Ω-hydroxy-Copolymere, α-Ω-dihydroxy-Copolymere, α-Ω-trihydroxy-Copolymere und α-Ω-tetrahydroxy-Copolymere aus den Monomeren Ethylenoxid, Propylenoxid und/oder Butylenoxid in beliebiger Zusammensetzung. Bevorzugt als SchmiermittelBasisöle sind solche Polyalkylenglykole, die Propylenoxid in einem Anteil von mindestens 20 Gew.-% enthalten. Weiterhin sind solche Polyalkylenglykole bevorzugt, die eine mittlere Molmasse von 700 - 50000 g/mol, bevorzugt 700 - 10000 g/mol aufweisen. Weiterhin sind solche Polyalkylenglykole bevorzugt, die bei 40°C kinematische Viskositäten von 20 bis 40000 mm²/s, bevorzugt 20 bis 6000 mm²/s aufweisen.

Die erfindungsgemäßen Polyalkylenglykole enthalten im allgemeinen 10 bis 100 ppm DMC-Katalysator und weisen eine enge Molmassenverteilung mit geringen niedermolekularen flüchtigen Anteilen auf.

Ein weiterer Vorteil des erfindungsgemäßen Verfahrens zur Herstellung von Polyalkylenglykolen ist die im Vergleich zum Herstellungsverfahren mit alkalischer Katalyse wesentlich geringere Reaktionszeit, die benötigt wird, um eine bestimmte Viskosität zu erreichen.

Die erfindungsgemäßen Polyalkylenglykole sind je nach dem Verhältnis der eingesetzten Alkylenoxide mehr oder weniger wasserlöslich. Durch Zusatz üblicher Schmierstoffadditive und Korrosionsinhibitoren, wie z.B. Phosphorsäureester, oder Schwefelverbindungen wie Merkaptobenzothiazol oder Triazolen und aminischen Korrosionsinhibitoren können aus den erfindungsgemäßen Polyalkylenglykol-Schmiermittel-Basisölen fertig formulierte Schmierstoffe für verschiedene Anwendungen wie zum Beispiel Getriebeöle, Hydrauliköle, Schmierfette oder Metallbearbeitungsflüssigkeiten formuliert werden.

Darüber hinaus können den Polyalkylenglykolen zur Herstellung fertig formulierter Schmierstoffe noch übliche Antioxidantien in Mengen bis zu 5000 ppm zugesetzt werden. Übliche Antioxidantien sind z.B. phenolische Antioxidantien wie BHT, para-Methoxyphenol, Hydrochinon oder BHA, oder aminische Antioxidantien wie polymeres Trimethyldihydrochinolin.

### Beispiele

### Beispiel 1 (erfindungsgemäß)

### Herstellung eines α-Butoxy-Ω-Hydroxy-Polypropylenglykols mit einer Molmasse von 2500 g/mol Polyalkylenglykol-Schmiermittelbasisöl der Viskositätsklasse ISO VG 150

In einem 5 Liter Druckreaktor wird 754 g eines Gemischs aus einem α-Butoxy-Ω-Hydroxy-Polypropylenglykol (80 Gew.-%) mit Molmasse 800 g/mol und Butoxydipropylenglykol (20 Gew.-%) vorgelegt. Unter Stickstoff wird zu diesem Gemisch 160 ppm des in EP 1 276 563 beschriebenen DMC-Katalysators hinzugefügt. Das Gemisch wird unter Stickstoff auf eine Temperatur auf 130°C aufgeheizt und bei einem Druck von etwa 2 bar eine Menge von 3468 g Propylenoxid so dosiert, dass die entstehende Reaktionswärme abgeführt werden kann. Der Zeitraum der Dosierung beträgt etwa 2 Stunden. Das entstehende α-Butoxy-Ω-Hydroxy-Polypropylenglykol zeigt folgende Charakteristik: Molmasse (Zahlenmittel aus GPC) Mn = 2500 g/mol, Molmasse (Gewichtsmittel aus GPC) Mw = 2600 g/mol, Polydispersität = Mw/Mn = 1,04, OH-Zahl = 21,8 mgKOH/g, kinematische Viskosität bei 40°C = 181 mm²/s, kinematische Viskosität bei 100°C = 31 mm²/s, Dichte bei 20°C = 0,996 g/cm³. ¹H-NMR Endgruppen Analytik: Verhältnis Butyl : sek-OH : Allyl = 1 : 1: 0,01. Der Gehalt an VOCs (flüchtige organische Anteile) bestimmt nach DIN 55649 beträgt 0,98 g/Liter.

### Beispiel 2 (erfindungsgemäß)

### Herstellung eines α-Butoxy-Ω-Hydroxy-Polypropylenglykols mit Molmasse von 3400 g/mol, Polyalkylenglykol-Schmiermittelbasisöl der Viskositätsklasse ISO VG 320

In einem 5 Liter Druckreaktor wird 343 g eines Gemischs aus einem α-Butoxy-Ω-Hydroxy-Polypropylenglykol (80 Gew.-%) mit Molmasse 800 g/mol und Butoxydipropylenglykol (20 Gew.-%) vorgelegt. Unter Stickstoff wird zu diesem Gemisch 200 ppm des in EP 1276563 beschriebenen DMC-Katalysators hinzugefügt. Das Gemisch wird unter Stickstoff auf eine Temperatur auf 130°C aufgeheizt und bei einem Druck von etwa 2 bar eine Menge von 2780 g Propylenoxid so dosiert, dass die entstehende Reaktionswärme abgeführt werden kann. Der Zeitraum der Dosierung beträgt etwa 3 Stunden. Das entstehende α-Butoxy-Ω-Hydroxy-Polypropylenglykol zeigt folgende Charakteristik: OH-Zahl = 15,6 mg KOH/g, Molmasse (Zahlenmittel aus GPC) Mn = 3400 g/mol, Molmasse (Gewichtsmittel aus GPC) Mw = 4000 g/mol, Polydispersität = 1,18, kinematische Viskosität bei 40°C = 360 mm²/s, kinematische Viskosität bei 100°C = 58 mm²/s, Dichte bei 20°C = 0,998 g/cm³. ¹H-NMR Endgruppen Analytik: Verhältnis Butyl : sek-OH : Allyl = 1 : 1,05 : 0,01. Der Gehalt an VOCs (flüchtige organische Anteile) bestimmt nach DIN 55649 beträgt 0,98 g/Liter.

### Beispiel 3 (erfindungsgemäß)

### Herstellung eines α-Ω-Dihydroxy-Polyoxyethylen-oxypropylenglykolcopolymers mit Molmasse 2000 g/mol, Polyalkylenglykol-Schmiermittelbasisöl der Viskositätsklasse ISO VG 220

In einem 5 Liter Druckreaktor wird 551 g eines Gemischs aus einem α-Ω-Di-Hydroxy-Polyoxyethylen-oxypropylenglykolcopolymer (90 Gew.-%) Molmasse 2000 g/mol und Dipropylenglykol (10 Gew.-%) vorgelegt. Unter Stickstoff werden zu diesem Gemisch 400 ppm des in EP 1 276 563 beschriebenen DMC-Katalysators hinzugefügt. Das Gemisch wird unter Stickstoff auf eine Temperatur auf 145°C aufgeheizt und bei einem Druck von etwa 2 bar eine Menge von 783 g eines Gemischs aus Ethylenoxid und Propylenoxid (Verhältnis 64 : 36 Gew.-%) im Zeitraum von 3 Stunden so dosiert, dass die entstehende Reaktionswärme abgeführt werden kann. Das entstehende α-Ω-Di-Hydroxy-Poly-oxyethylen-oxypropylen-glykol-copolymer zeigt folgende Charakteristik: OH-Zahl = 53,4 mg KOH/g, Molmasse (Zahlenmittel aus GPC) Mn =2000 g/mol, Molmasse (Gewichtsmittel aus GPC) Mw = 2350 g/mol, Polydispersität = 1,18, kinematische Viskosität bei 40°C = 225 mm²/s, kinematische Viskosität bei 100°C = 43 mm²/s, Dichte bei 20°C = 1,085 g/cm³. ¹H-NMR Endgruppen Analytik: Verhältnis prim-OH : sek-OH : Allyl = 0,34 : 1 : 0,01. Der Gehalt an VOCs (flüchtige organische Anteile) bestimmt nach DIN 55649 beträgt 0,96 g/Liter.

### Beispiel 4

### Anwendung des Produkts aus Beispiel 1 in einer Schmiermittelformulierung

In dem Produkt aus Beispiel 1 werden bei 60 bis 90°C 0,5 % Isotridecylphosphat, 0,5 % phenolisches Antioxidans (4,4-Methylen-bis-(2,6-ditertbutylphenol), 300 ppm Tolyltriazol und 3,5 % N-phenylstyrolisiertes Benzylamin gelöst. Man erhält ein Getriebeschmiermittel der ISO-VG (Viskositätsklasse nach DIN 51519) 150 das im FZG-Test nach DIN 51354 die Laststufe 12 erreicht.

### Vergleichsbeispiel 1

### Herstellung eines α-Butoxy-Ω-Hydroxy-Polypropylenglykols mit Molmasse 3300 g/mol mittels alkalischer Katalyse; konventionell hergestelltes Polyalkylenglykol-Schmiermittelbasisöl der Viskositätsklasse ISO VG 320

In einem 5 Liter Druckreaktor werden 20,8 g Butoxydipropylenglykol und 4,4 g Kaliumhydroxid vorgelegt. Durch Anlegen von Vakuum bei ca. 100°C für 1 Stunde wird das Gemisch getrocknet. Anschließend wird das Gemisch unter Stickstoff auf eine Temperatur von 130°C aufgeheizt und bei einem Druck von etwa 3 bis 6 bar eine Menge von 1966 g Propylenoxid so dosiert, dass die entstehende Reaktionswärme abgeführt werden kann. Der Zeitraum der Dosierung beträgt etwa 30 Stunden. Das entstehende α-Butoxy-Ω-Hydroxy-Polypropylenglykol zeigt folgende Charakteristik: Molmasse (Zahlenmittel aus GPC) Mn = 3300 g/mol, Molmasse (Gewichtsmittel aus GPC) Mw = 5400 g/mol, Polydispersität = Mw/Mn = 1,31, OH-Zahl = 20 mg KOH/g, kinematische Viskosität bei 40°C = 372 mm²/s, kinematische Viskosität bei 100°C = 60 mm²/s, Dichte bei 20°C =1 ,00 g/cm³. ¹H-NMR Endgruppen Analytik: Verhältnis Butyl : sek-OH : (Allyl+Propenyl) = 1 : 2,08 : 0,7. Der Gehalt an VOCs (flüchtige organische Anteile) bestimmt nach DIN 55649 beträgt 1,95 g/Liter.

Durch die Bildung niedermolekularer Anteile wird hierbei die Molmassenverteilung deutlich verbreitert und die Polydispersität erhöht. Ebenso entstehen mehr niedermolekulare flüchtige Anteile (VOCs). Aus diesem Grunde ist auch die Reaktionszeit, die benötigt wird die vorgegebene ISO VG Klasse zu erreichen wesentlich länger.

## Patentansprüche

1. Verfahren zur Herstellung von Polyalkylenglykolen, indem man ein Gemisch aus einem ein- oder mehrwertigen Alkohol und einem Polyalkylenglykolprepolymer mit einem C₂- bis C₄-Alkylenoxid oder einer Mischung solcher Alkylenoxide in Gegenwart eines Katalysators, der Zn₃[Co(CN)₆]₂ enthält, umsetzt, wobei der ein- oder mehrwertige Alkohol ein Molekulargewicht von bis zu 500 g/mol aufweist, sowie 1 bis 20 Kohlenstoffatome und 1 bis 10 Hydroxylgruppen enthält, und das Polyalkylenglykolprepolymer das Additionsprodukt eines C₂- bis C₄-Alkylenoxids oder einer Mischung solcher Alkylenoxide in einer Menge von mindestens 500 g/mol an einen ein- oder mehrwertigen Alkohol mit 1 bis 20 Kohlenstoffatomen und 1 bis 10 Hydroxylgruppen ist.

2. Verfahren nach Anspruch 1, worin das Gewichtsverhältnis des Gemischs aus Polyalkylenglykolprepolymer und ein- oder mehrwertigem Alkohol vor der Alkoxylierung zwischen 99 : 1 und 60 : 40 liegt.

3. Verfahren nach Anspruch 1 und/oder 2, wobei der DMC-Katalysator in einer Konzentration von 100 bis 600 ppm vorliegt.

4. Verfahren nach einem oder mehreren der Ansprüche 1 bis 3, worin das Polyalkylenglykolprepolymer ein Additionsprodukt von C₂- bis C₄-Alkylenoxid oder einer Mischung solcher Alkylenoxide an einen Alkohol mit 2 bis 12 Kohlenstoffatomen und 1 bis 6 Hydroxylgruppen ist.

5. Verfahren nach einem oder mehreren der Ansprüche 1 bis 4, worin das Polyalkylenglykolprepolymer der Formel 2 Propylenoxid in einem Anteil von mindestens 20 Gew.-% als Monomer enthält.

6. Verfahren nach einem oder mehreren der Ansprüche 1 bis 5, worin der Startalkohol 2 bis 12 Kohlenstoffatome und 1 bis 6 Hydroxylgruppen enthält.

7. Verfahren nach einem oder mehreren der Ansprüche 1 bis 6, worin der Startalkohol R'-OH ausgewählt ist aus Monoalkoholen der Formel R'-OH mit R' = C₁-C₂₀-Alkyl oder R' = C₁-C₂₀-Alkyl-(O-(C₂-C₄)-Alkylen)ₙ- mit n = 1, 2, oder 3
Diolen der Formel HO-R²-OH mit R²= C₂-C₆-Alkylen, -(C₂-C₄)-Alkylen-O-(C₂-C₄)-Alkylen- oder -(C₂-C₄)-Alkylen-O-(C₂-C₄)-Alkylen-O-(C₂-C₄)-Alkylen- ,
Glycerin, Trimethylolpropan oder Pentaerythritol.

8. Verfahren nach einem oder mehreren der Ansprüche 1 bis 7, worin als Alkylenoxide Ethylenoxid, Propylenoxid, Butylenoxid oder Gemische daraus eingesetzt werden.

9. Verfahren nach einem oder mehreren der Ansprüche 1 bis 8, worin die Alkoxylierung bei einer Temperatur von 90 - 170°C erfolgt.

10. Verwendung von Polyalkylenglykolen, erhalten indem man ein Gemisch aus einem ein- oder mehrwertigen Alkohol und einem Polyalkylenglykolprepolymer mit einem C₂- bis C₄-Alkylenoxid oder einer Mischung solcher Alkylenoxide in Gegenwart eines Katalysators, der Zn₃[Co(CN)₆]₂ enthält, umsetzt, wobei der ein- oder mehrwertige Alkohol ein Molekulargewicht von bis zu 500 g/mol aufweist, sowie 1 bis 20 Kohlenstoffatome und 1 bis 10 Hydroxylgruppen enthält, und das Polyalkylenglykolprepolymer das Additionsprodukt eines C₂- bis C₄-Alkylenoxids oder einer Mischung solcher Alkylenoxide in einer Menge von mindestens 500 g/mol an einen ein- oder mehrwertigen Alkohol mit 1 bis 20 Kohlenstoffatomen und 1 bis 10 Hydroxylgruppen ist, zur Formulierung von Schmiermitteln oder wässrigen Hydraulikflüssigkeiten.

## Claims

1. A process for preparing polyalkylene glycols by reacting a mixture of a mono- or polyhydric alcohol and a polyalkylene glycol prepolymer with a C₂- to C₄-alkylene oxide or a mixture of such alkylene oxides in the presence of a catalyst which comprises Zn₃[Co(CN)₆]₂, the mono- or polyhydric alcohol having a molecular weight of up to 500 g/mol and containing from 1 to 20 carbon atoms and from 1 to 10 hydroxyl groups, and the polyalkylene glycol prepolymer being the addition product of a C₂- to C₄-alkylene oxide or of a mixture of such alkylene oxides in an amount of at least 500 g/mol to a mono- or polyhydric alcohol having from 1 to 20 carbon atoms and from 1 to 10 hydroxyl groups.

2. The process as claimed in claim 1, in which the weight ratio of the mixture of polyalkylene glycol prepolymer and mono- or polyhydric alcohol before the alkoxylation is between 99:1 and 60:40.

3. The process as claimed in claim 1 and/or 2, wherein the DMC catalyst is present in a concentration of 100-600 ppm.

4. The process as claimed in one or more of claims 1 to 3, in which the polyalkylene glycol prepolymer is an addition product of C₂- to C₄-alkylene oxide or a mixture of such alkylene oxides to an alcohol having from 2 to 12 carbon atoms and from 1 to 6 hydroxyl groups.

5. The process as claimed in one or more of claims 1 to 4, in which the polyalkylene glycol prepolymer of the formula 2 contains propylene oxide in a proportion of at least 20% by weight as a monomer.

6. The process as claimed in one or more of claims 1 to 5, in which the starter alcohol contains from 2 to 12 carbon atoms and from 1 to 6 hydroxyl groups.

7. The process as claimed in one or more of claims 1 to 6, in which the starter alcohol R'-OH is selected from monoalcohols of the formula R'-OH where R' = C₁-C₂₀-alkyl or R' = C₁-C₂₀-alkyl-(O-(C₂-C₄)-alkylene)ₙ where n=1, 2, or 3,
diols of the formula HO-R²-OH where R² = C₂-C₆-alkylene, -(C₂-C₄)-alkylene-O-(C₂-C₄)-alkylene- or -(C₂-C₄)-alkylene-O-(C₂-C₄)-alkylene-O-(C₂-C₄)-alkylene-,
glycerol, trimethylolpropane or pentaerythritol.

8. The process as claimed in one or more of claims 1 to 7, in which the alkylene oxides used are ethylene oxide, propylene oxide, butylene oxide or mixtures thereof.

9. The process as claimed in one or more of claims 1 to 8, in which the alkoxylation is effected at a temperature of 90-170°C.

10. The use of polyalkylene glycols obtained by reacting a mixture of a mono- or polyhydric alcohol and a polyalkylene glycol prepolymer with a C₂- to C₄-alkylene oxide or a mixture of such alkylene oxides in the presence of a catalyst which comprises Zn₃[Co(CN)₆]₂, the mono- or polyhydric alcohol having a molecular weight of up to 500 g/mol and containing from 1 to 20 carbon atoms and from 1 to 10 hydroxyl groups, and the polyalkylene glycol prepolymer being the addition product of a C₂- to C₄-alkylene oxide or of a mixture of such alkylene oxides in an amount of at least 500 g/mol to a mono- or polyhydric alcohol having from 1 to 20 carbon atoms and from 1 to 10 hydroxyl groups for formulating lubricants or aqueous hydraulic fluids.

## Revendications

1. Procédé pour la préparation de polyalkylèneglycols par mise en réaction d'un mélange d'alcool mono- ou polyhydrique et d'un prépolymère polyalkylèneglycol avec un oxyde d'alkylène en C₂-C₄ ou un mélange de tels oxydes d'alkylène, en présence d'un catalyseur qui contient Zn₃[Co(CN)₆]₂, l'alcool mono- ou polyhydrique ayant une masse moléculaire allant jusqu'à 500 g/mole et contenant de 1 à 20 atomes de carbone et de 1 à 10 groupes hydroxy, et le prépolymère polyalkylèneglycol étant le produit d'addition d'un oxyde d'alkylène en C₂-C₄ ou d'un mélange de tels oxydes d'alkylène en une quantité d'au moins 500 g/mole sur un alcool mono- ou polyhydrique ayant de 1 à 20 atomes de carbone et comportant de 1 à 10 groupes hydroxy.

2. Procédé selon la revendication 1, dans lequel le rapport pondéral du mélange de prépolymère polyalkylèneglycol et d'un alcool mono- ou polyhydrique avant l'alkylation est compris entre 99:1 et 60:40.

3. Procédé selon la revendication 1 et/ou la revendication 2, dans lequel le catalyseur DMC est présent à une concentration de 100 à 600 ppm.

4. Procédé selon une ou plusieurs des revendications 1 à 3, dans lequel le prépolymère polyalkylèneglycol est un produit d'addition d'oxyde d'alkylène en C₂-C₄ ou d'un mélange de tels oxydes d'alkylène sur un alcool ayant de 2 à 12 atomes de carbone et comportant de 1 à 6 groupes hydroxy.

5. Procédé selon une ou plusieurs des revendications 1 à 4, dans lequel le prépolymère polyalkylèneglycols de formule 2 contient en tant que monomère de l'oxyde de propylène en une proportion d'au moins 20 % en poids.

6. Procédé selon une ou plusieurs des revendications 1 à 5, dans lequel l'alcool de départ contient de 2 à 12 atomes de carbone et comporte de 1 à 6 groupes hydroxy.

7. Procédé selon une ou plusieurs des revendications 1 à 6, dans lequel l'alcool de départ R'-OH est choisi parmi des mono-alcools de formule R'-OH où R' = alkyle en C₁-C₂₀ ou R' = alkyl(C₁-C₂₀)[-O-alkylène(C₂-C₄)]ₙ- où n = 1, 2 ou 3,
des diols de formule HO-R²-OH où R² = alkylène en C₂-C₆, -alkylène (C₂-C₄) -O-alkylène (C₂-C₄) - ou alkylène(C₂-C₄ -O-alkylène(C₂-C₄) -O-alkylène (C₂-C₄) -,
le glycérol, le triméthylolpropane et le pentaérythritol.

8. Procédé selon une ou plusieurs des revendications 1 à 7, dans lequel on utilise comme oxydes d'alkylène l'oxyde d'éthylène, l'oxyde de propylène, l'oxyde de butylène ou des mélanges de ceux-ci.

9. Procédé selon une ou plusieurs des revendications 1 à 8, dans lequel l'alcoxylation est effectuée à une température de 90 à 170 °C.

10. Utilisation de polyalkylèneglycols obtenus par mise en réaction d'un mélange d'un alcool mono- ou polyhydrique et d'un prépolymère polyalkylèneglycol avec un oxyde d'alkylène en C₂-C₄ ou un mélange de tels oxydes d'alkylène, en présence d'un catalyseur qui contient Zn₃[Co(CN)₆]₂, l'alcool mono- ou polyhydrique ayant une masse moléculaire allant jusqu'à 500 g/mole et contenant de 1 à 20 atomes de carbone et 1 à 10 groupes hydroxy, et le prépolymère polyalkylèneglycol étant le produit d'addition d'un oxyde d'alkylène en C₂-C₄ ou d'un mélange de tels oxydes d'alkylène en une quantité d'au moins 500 g/mole sur un alcool mono- ou polyhydrique ayant de 1 à 20 atomes de carbone et comportant de 1 à 10 groupes hydroxy, pour la formulation de lubrifiants ou de fluides hydrauliques aqueux.
